# FASCICULE DE BREVET EUROPEEN

(11) **EP 0 511 084 B1**
(45) Date de publication et mention de la délivrance du brevet: **30.08.1995**
(21) Numéro de dépôt: 92401125.7
(22) Date de dépôt: 21.04.1992
(51) Int. Cl.: B23K 20/227, B32B 15/01

(54) **Tôle plaquée inoxydable et procédé de réalisation de cette tôle plaquée**
Rostfreies plattiertes Blech und Verfahren zu seiner Herstellung
Stainless steel clad plate and process for the manufacture thereof

(30) Priorité: 22.04.1991 FR 9104937
(43) Date de publication de la demande: 28.10.1992
(73) Titulaire: CREUSOT-LOIRE INDUSTRIE, F-92800 Puteaux (FR)
(72) Inventeur: Dupoiron, François, F-71200 Le Creusot (FR); Jobard, Daniel, F-71670 Le Breuil (FR)
(74) Mandataire: Bouget, Lucien

(56) Documents cités:
- EP-A- 0 233 437
- REVUE DE METALLURGIE vol. 58, no. 12, Décembre 1961, PARIS, FR pages 1039 -1048; P. BASTIEN: 'Les tôles inoxydables plaquées'

## Description

L'invention est relative à une tôle plaquée inoxydable sur ses deux faces et à un procédé de réalisation de cette tôle plaquée.

Dans de nombreuses applications d'aciers ou d'alliages dans des milieux très corrosifs tels que des acides on utilise des aciers de type superausténitique ou des alliages à base nickel sous forme de tôle ; c'est le cas notamment lorsqu'on réalise des citernes ou certains conduits de cheminée.

Les produits utilisés contenant beaucoup de nickel sont très chers. Pour réduire le coût, comme il n'est pas possible d'abaisser trop fortement l'épaisseur pour des raisons liées aux caractéristiques requises pour les constructions réalisées avec ces tôles, on est amené à utiliser des tôles plaquées. Ces tôles sont obtenues en plaquant une couche d'alliage sur une base en acier de construction.

Cette technique présente plusieurs inconvénients :
- la face externe de la base en acier de construction qui n'est pas inoxydable peut être soumise à une corrosion atmosphérique ou à une corrosion due à des fuites de produits corrosifs lorsque la tôle est utilisée pour la réalisation d'un récipient renfermant des produits corrosifs ; la face externe peut être peinte, mais ceci est une opération coûteuse, qui ne protège pas parfaitement la surface et qui demande de l'entretien,
- les traitements thermiques nécessaires à l'obtention de bonnes caractéristiques de tenue à la corrosion pour le placage en alliage sont souvent incompatibles avec les traitements thermiques nécessaires à la base pour obtenir de bonnes caractéristiques mécaniques notamment de résilience,
- lors du laminage à chaud, les propriétés rhéologiques très différentes entre base et placage entraînent des irrégularités d'épaisseur de placage et pour assurer une épaisseur minimum de placage garantie en tout point on est amené à ajouter une surépaisseur de placage.
- il n'est pas possible de laminer à froid une tôle dont une face est en alliage et l'autre en acier de construction du fait du comportement rhéologique très différent des deux matériaux.

Lorsqu'on utilise des tôles comportant une couche d'acier inoxydable plaquée sur une base en acier de construction, pour réaliser des constructions soudées, lors de la soudure des tôles, il peut se produire une contamination de l'acier inoxydable par le carbone ou d'autres éléments d'alliage de l'acier de construction (phénomène de dilution).

Le brevet MANNESMANN EP 0.233.437 propose une solution au problème technique de la compatibilité des traitements thermiques du placage et de la base qui consiste à utiliser une base en acier inoxydable austénoferritique. Mais cette solution ne résoud pas le problème posé par les grandes différences de rhéologie tant à chaud qu'à froid entre la base et le placage.

Le but de l'invention est de proposer une tôle plaquée qui présente une résistance à la corrosion par des produits très agressifs, tels que des acides, sur une face et qui soit également résistante à la corrosion sur l'autre face, cette tôle étant beaucoup moins coûteuse qu'une tôle en alliage massive et pouvant être obtenue avec une faible épaisseur de placage et une bonne régularité d'épaisseur de placage tout en évitant une contamination par dilution, et qui permette d'obtenir par laminage à froid des tôles minces ayant un bon état de surface.

L'objet de l'invention est une tôle plaquée inoxydable constituée de deux couches métalliques superposées et plaquées l'une sur l'autre comportant une première couche ou placage en alliage à base de fer ou de nickel à structure cubique à faces centrées renfermant au moins 11 % de chrome et au moins 17 % de nickel et résistant à la corrosion par des milieux très agressifs tels que des acides et une seconde couche ou base en acier inoxydable austénitique comportant moins de 5 % de ferrite renfermant au moins 11 % de chrome et au plus 17 % de nickel, résistant à la corrosion atmosphérique.

La couche en acier inoxydable austénitique est également susceptible de résister à des projections accidentelles de produits très corrosifs tels que des acides.

Les tôles plaquées suivant l'invention sont obtenues par l'un des procédés suivants : colaminage à chaud, placage par explosion, placage par explosion suivi d'un relaminage à chaud ; les tôles plaquées sont soumises à un traitement d'hypertrempe à partir d'une température comprise entre 950 et 1180°C.

Ces tôles, après laminage à chaud, peuvent être laminées à froid.

L'invention concerne des tôles qui, lorsqu'elles sont simplement laminées à chaud ont une épaisseur supérieure ou égale à 4 mm environ, et qui, lorsqu'elles sont relaminées à froid, ont une épaisseur qui peut descendre jusqu'à 2 mm et un excellent état de surface.

L'invention va maintenant être décrite de façon plus précise mais non limitative.

Pour réaliser les tôles plaquées selon l'invention, on plaque soit par colaminage, soit par explosion, soit par explosion et relaminage, suivant des techniques connues, une première plaque d'alliage à très bonne tenue à la corrosion sévère sur une deuxième plaque d'acier inoxydable austénitique, dite "base" pour constituer le "placage".

On fait subir à ces tôles plaquées les traitements thermiques et les opérations de finition connues de l'homme de métier ; en particulier, on réalise une hypertrempe à partir d'une température comprise entre 950°C et 1180°C ; cette hypertrempe est nécessaire pour conférer aux deux couches leurs propriétés de résistance à la corrosion. On obtient ainsi des tôles plaquées d'épaisseur supérieure à 5 mm dont, environ 1/3 de l'épaisseur correspond au placage et 2/3 de l'épaisseur à la base.

Dans l'invention, le placage est soit un alliage à base nickel soit un acier superausténitique. Dans les deux cas, la teneur en chrome est supérieure à 11 % et la teneur en nickel supérieure à 17 % pour assurer l'inoxydabilité, en particulier la résistance aux milieux très agressifs.

Ces alliages ou aciers sont très chers.

La base est constituée d'un acier inoxydable austénitique contenant au moins 11 % de chrome pour assurer une bonne tenue à la corrosion atmosphérique ou aux projections accidentelles de produits corrosifs et au plus 17 % de nickel. La composition de cet acier est choisie pour qu'il ait une structure austénitique dont la teneur en ferrite soit inférieure à 5 % de façon à ce que les propriétés rhéologiques à chaud et à froid du placage et de la base soient les plus proches possibles.

Le nickel est en une quantité juste suffisante pour conférer une structure austénitique à la base. Ces aciers sont beaucoup moins chers que les alliages ou acier superausténitiques servant à réaliser le placage.

On peut également utiliser des aciers inoxydables austénitiques à hautes teneurs en manganèse ou en azote à hautes caractéristiques mécaniques, par exemple des aciers contenant 17 à 20 % de chrome, 8 à 11 % de nickel, 2 à 9 % de manganèse et 0,12 à 0,5 % d'azote.

L'homme de métier sait choisir la composition de la base pour que son traitement thermique soit compatible avec celui du placage.

On obtient ainsi une tôle plaquée ayant, du fait de son épaisseur, les propriétés mécaniques recherchées compte tenu de l'utilisation qui peut en être faite, une très bonne inoxydabilité sur une des faces (celle qui correspond au placage) et une inoxydabilité, au moins aux agressions atmosphériques et à des projections accidentelles de produits très corrosifs, sur l'autre face (celle qui correspond à la base) ; enfin, cette tôle est beaucoup moins chère qu'une tôle d'alliage massive ayant le même comportement mécanique.

Un des avantages de l'invention, qui la distingue des tôles plaquées classiques (sur base en acier de construction), provient de ce qu'aussi bien la base que le placage ont une structure austénitique et des caractéristiques mécaniques voisines si bien que leurs comportements au cours d'un laminage à froid ou à chaud sont voisins. De ce fait, le placage présente une bonne régularité d'épaisseur du fait de ses propriétés rhéologiques proches de celles de la base. De plus, il est possible de réaliser une couche de placage relativement mince (de l'ordre de 2 mm) sur la base sans risquer une contamination par dilution du placage par les éléments de l'acier de la base. De ce fait, il est possible de relaminer à froid les tôles obtenues par laminage à chaud et d'obtenir des tôles plaquées d'épaisseur pouvant descendre jusqu'à 2 mm. Dans ce cas, le laminage à froid est généralement effectué de façon que l'épaisseur du placage ne descende pas en-dessous d'un millimètre. En effet, pour des épaisseurs inférieures à 1 mm, toute rayure ou agression mécanique risquerait d'endommager le placage à l'endroit de cette agression, de façon telle qu'il ne remplirait plus son office de protection contre la corrosion sévère.

Un autre avantage de l'invention réside dans l'utilisation d'un matériau pour la base à très bas carbone et comportant des éléments d'alliage Cr et Ni. Cette composition permet de réduire les phénomènes de dilution améliorant ainsi le comportement de la tôle lors d'une soudure.

La faible épaisseur des tôles relaminées à froid a aussi l'avantage de permettre d'obtenir des gains de poids et des gains sur les coûts, ce qui est particulièrement intéressant lorsque ces tôles sont destinées à réaliser des réservoirs pour le transport de produits très agressifs tels que des acides ; le gain de poids se traduisant par une diminution du poids mort transporté.

Enfin, la réalisation de tôles plaquées par laminage à froid permet l'obtention des état de surface liés à ce procédé.

A titre d'exemple non limitatifs, pour réaliser le placage, on peut utiliser :
- si le milieu le plus agressif est l'acide fluorhydrique, un alliage à base nickel de composition :
   Cr = 22 %, Mo = 7 %, W = 1,5 %, Fe = 19 % C ≦ 0,015 % ;
- si le milieu le plus agressif est l'acide sulfurique, un alliage à base nickel de composition :
   Cr = 16 %, Mo = 16 %, W = 4 %, Fe = 5 %, C ≦ 0,02 % ;
- si le milieu le plus agressif est l'acide phosphorique avec présence de chlorures, un acier superausténitique de composition :
   Cr = 25 %, Ni = 25 %, Mo = 5 % ;
- si le milieu le plus agressif est le chlorure ferrique, un alliage à base nickel de composition :
   Cr = 16 %, Mo = 13 %, W = 3 %, C ≦ 0,015 %.

D'une façon générale, on choisit pour le placage, un alliage à haute tenue à la corrosion, à structure cubique à faces centrées tel qu'un alliage à base de fer ou de nickel contenant au moins 11 % de chrome et 17 % de nickel ainsi qu'éventuellement du molybdène dans une proportion pondérale supérieure à 1 % et du tungstène dans une proportion supérieure à 0,5 %.

Ces alliages peuvent également renfermer de l'azote, du cobalt, du niobium ou du cuivre.

On peut avantageusement utiliser des alliages comportant une forte teneur en molybdène par exemple de l'ordre de 28 %.

Pour la base, si le milieu le moins agressif est une atmosphère industrielle, on peut utiliser un acier inoxydable austénitique du type 18-8 dont la teneur en ferrite est inférieure à 5 % et contenant notamment :

| Cr % | Ni % |
|---|---|
| 17-20 | 8-11 |

avec additions éventuelles d'azote 0,12 à 0,5 % ou de manganèse 2 à 9 % ou encore un acier contenant notamment :
Cr (16 à 18 %), Ni (10 à 14 %), Mo ( 2 à 4 %) avec additions éventuelles d'azote (0,12 à 0,5 %),
ou encore des aciers contenant notamment :
Cr (20 à 24 %), Ni (14 à 17 %), Mo (2 à 4,5 %) avec additions d'azote (0,12 à 0,5 %) et de manganèse (2 à 6 %) avec par exemple l'analyse suivante :

| Cr | Ni | Mn | Mo | N | C | Si | Nb | P | S |
|---|---|---|---|---|---|---|---|---|---|
| 23 | 15 | 5,5 | 2,8 | 0,4 | <0,03 | <0,4 | <O,2 | <0,03 | <0,01. |

Dans tous les cas, la composition de la base est ajustée pour lui conférer une structure comportant moins de 5 % de ferrite et ayant des propriétés rhéologiques à chaud et à froid les plus proches possibles de celles du placage.

Ces aciers peuvent être à bas carbone (C < 0,03 %) ou à très bas carbone (C < 0,015 %) et éventuellement comporter des additions d'azote.

Ce qui revient à choisir pour les bases parmi les aciers du type 304L, 316L, 317L ou 304LN, 316LN, 317LN, XM18, X M19 selon la norme américaine AISI ou les aciers équivalents, pour autant que leur équilibrage structural leur confère moins de 5 % de ferrite.

Enfin, les aciers peuvent contenir des additions de cuivre (0,5 à 3 %) ou de tungstène (0,5 à 2 %).

De très nombreuses combinaisons sont possibles et l'homme de métier saura choisir celle qui est le mieux adaptée à chaque application particulière.

## Revendications

1. Tôle plaquée inoxydable constituée de deux couches métalliques superposées et plaquées l'une sur l'autre, comportant une première couche ou placage en un alliage à base de fer ou de nickel à structure cubique à faces centrées renfermant au moins 11% de chrome et au moins 17% de nickel et résistant à la corrosion par des milieux très corrosifs tels que des acides et une seconde couche ou base en acier inoxydable renfermant au moins 11% de chrome et au plus 17% de nickel résistant à la corrosion atmosphérique, caractérisée en ce que la seconde couche ou base est en acier inoxydable austénitique dont la structure comporte moins de 5 % de ferrite.

2. Tôle plaquée selon' la revendication 1, caractérisée en ce que la teneur en carbone de la base est inférieure à 0,03 %.

3. Tôle plaquée selon l'une quelconque des revendications 1 et 2, caractérisée en ce que l'alliage de la couche de placage renferme l'un au moins des éléments molybdène et tungstène, dans une proportion pondérale supérieure à 1% en ce qui concerne le molybdène et supérieure à 0,5 % en ce qui concerne le tungstène.

4. Tôle plaquée suivant l'une quelconque des revendications 1 à 3, caractérisée en ce que l'alliage de la couche de placage renferme de plus l'un au moins des éléments azote, cobalt, niobium et cuivre.

5. Tôle plaquée suivant l'une quelconque des revendications 1 à 4, caractérisée en ce que l'acier de la base renferme de 17 à 20 % de chrome, de 8 à 11 % de nickel et éventuellement de 2 à 9 % de manganèse et/ou 0,12 à 0,5 % d'azote.

6. Tôle plaquée suivant l'une quelconque des revendications 1 à 4, caractérisée en ce que l'acier de la base renferme en plus du chrome et du nickel, du molybdène, de l'azote et du manganèse.

7. Tôle plaquée selon l'une quelconque des revendications 1 à 6, caractérisée en ce que son épaisseur est égale ou supérieure à 4 mm.

8. Tôle plaquée selon l'une quelconque des revendications 1 à 6, caractérisée en ce que son épaisseur est comprise entre 2 et 4 mm.

9. Procédé de réalisation d'une tôle plaquée selon la revendication 7, caractérisé en ce que :
- on réalise un placage de la première couche et de la seconde couche par l'un des procédés suivants : colaminage à chaud, placage par explosion, placage par explosion suivi d'un relaminage à chaud, et
- on soumet la tôle plaquée à un traitement d'hypertrempe à partir d'une température comprise entre 950 et 1180°C.

10. Procédé de réalisation d'une tôle plaquée selon la revendication 8, caractérisé en ce que :
- on réalise un placage de la première couche et de la seconde couche par l'un des procédés suivants : colaminage à chaud, placage par explosion, placage par explosion suivi d'un relaminage à chaud,
- on soumet la tôle plaquée à un traitement d'hypertrempe à partir d'une température comprise entre 950 et 1180°C, et
- on lamine à froid la tôle plaquée jusqu'à une épaisseur comprise entre 2 et 4 mm, la première couche ou placage ayant une épaisseur au moins égale à 1 mm.

11. Utilisation d'une tôle plaquée selon l'une quelconque des revendications 1 à 8 pour la fabrication de citernes pour le transport de produits corrosifs.

12. Utilisation d'une tôle plaquée selon l'une quelconque des revendications 1 à 8 pour la fabrication de conduits de cheminée.

## Claims

1. Clad stainless steel plate consisting of two superimposed metal layers put one against the other, having a first layer or cladding made of an iron- or nickel-based alloy with a cubic structure with centred faces containing at least 11% chromium and at least 17% nickel and resistant to corrosion in highly corrosive environments such as acids, and a second, stainless steel based layer or base containing at least 11% chromium and no more than 17% nickel resistant to atmospheric corrosion, characterized in that the second layer or base is made of austenitic stainless steel, the structure of which includes at least 5% ferrite.

2. Clad plate according to Claim 1, characterised in that the carbon content or the base is less than 0.03%.

3. Clad plate according to either one of Claims 1 and 2, characterised in that the alloy of the cladding layer contains at least one of the elements molybdenum and tungsten, in a proportion by weight greater than 1% in the case of molybdenum and greater than 0.5% in the case of tungsten.

4. Clad plate in accordance with any one of Claims 1 to 3, characterised in that the alloy of the cladding layer additionally contains at least one of the elements nitrogen, cobalt, niobium and copper.

5. Clad plate in accordance with any one of Claims 1 to 4, characterised in that the steel of the base contains 17 to 20% chromium, 8 to 11% nickel and optionally 2 to 9% manganese and/or 0.12 to 0.5% nitrogen.

6. Clad plate in accordance with any one of Claims 1 to 4, characterised in that the steel of the base contains, in addition to the chromium and nickel, molybdenum, nitrogen and manganese.

7. Clad plate according to any one of Claims 1 to 6, characterised in that its thickness is equal to or greater than 4 mm.

8. Clad plate according to any one of Claims 1 to 6, characterised in that its thickness is between 2 and 4 mm.

9. Method for the manufacture of a clad plate according to Claim 7, characterised in that:
- the first layer and second layer are joined together by means of one of the following methods: hot co-rolling, explosion plating, or explosion plating followed by hot re-rolling, and
- the clad plate is subjected to an overhardening treatment using a temperature between 950 and 1180°C.

10. Method for the manufacture of a clad plate according to Claim 8, characterised in that:
- the first layer and second layer are joined together by means of one of the following methods: hot co-rolling, explosion plating or explosion plating followed by hot re-rolling,
- the clad plate is subjected to an overhardening treatment using a temperature between 950 and 1180°C, and
- the clad plate is cold-rolled to a thickness of between 2 and 4 mm, the first layer or cladding having a thickness equal to at least 1 mm.

11. Use of a clad plate according to any one of claims 1 to 8 for the manufacture of tanks for transporting corrosive products.

12. Use of a clad plate according to any one of Claims 1 to 8 for the manufacture of flues.

## Patentansprüche

1. Rostfreies plattiertes Blech, aufgebaut aus zwei übereinander liegenden und aufeinander plattierten metallischen Schichten, umfassend eine erste Schicht oder Plattierung aus einer Legierung auf Eisen- oder Nickelbasis mit kubisch-flächenzentrierter Struktur, einschließend mindestens 11% Chrom und mindestens 17% Nickel und beständig gegen Korrosion durch sehr korrosive Medien wie Säuren und eine zweite Schicht oder Basis aus rostfreiem Stahl, umfassend mindestens 11% Chrom und höchstens 17% Nickel, beständig gegen atmosphärische Korrosion, dadurch charakterisiert, daß die zweite Schicht oder Basis aus rostfreiem Austenit-Stahl besteht, dessen Struktur mindestens 5% Ferrit umfaßt.

2. Plattiertes Blech nach Anspruch 1, dadurch charakterisiert, daß der Kohlenstoffgehalt der Basis geringer ist als 0,03%.

3. Plattiertes Blech nach einem der Ansprüche 1 und 2, dadurch charakterisiert, daß die Legierung der Plattierungsschicht mindestens eines der Elemente Molybdän und Wolfram einschließt, in einem Gewichtsverhältnis größer als 1% für Molybdän und größer als 0,5% für Wolfram.

4. Plattiertes Blech nach einem der Ansprüche 1 bis 3, dadurch charakterisiert, daß die Legierung der Plattierungsschicht zusätzlich mindestens eines der Elemente Stickstoff, Kobalt, Niob und Kupfer einschließt.

5. Plattiertes Blech nach einem der Ansprüche 1 bis 4, dadurch charakterisiert, daß der Stahl der Basis 17-20% Chrom, 8-11% Nickel und wahlweise 2-9% Mangan und/oder 0,12 oder 0,5% Stickstoff einschließt.

6. Plattiertes Blech nach einem der Ansprüche 1 bis 4, dadurch charakterisiert, daß der Stahl der Basis zusätzlich Chrom und Nickel, Molybdän, Stickstoff und Mangan einschließt.

7. Plattiertes Blech nach einem der Ansprüche 1 bis 6, dadurch charakterisiert, daß seine Dicke gleich oder größer 4 mm ist.

8. Plattiertes Blech nach einem der Ansprüche 1 bis 6, dadurch charakterisiert, daß die Dicke zwischen 2 und 4 mm liegt.

9. Verfahren zur Herstellung eines plattierten Blechs nach Anspruch 7, dadurch charakterisiert, daß:
- man eine Plattierung der ersten Schicht und der zweiten Schicht nach einem der folgenden Verfahren durchgeführt: gemeinsames Warmwalzen, Explosionsauftragschweißen, Explosionsauftragschweißen gefolgt von Warm-Umwalzen,
- man das plattierte Blech einer Überhärtungsbehandlung beginnend von einer zwischen 950 und 1180°C liegenden Temperatur unterzieht.

10. Verfahren zur Herstellung eines plattierten Blechs nach Anspruch 8, dadurch charakterisiert, daß:
- man eine Plattierung der ersten Schicht und der zweiten Schicht nach einem der folgenden Verfahren durchgeführt: gemeinsames Warmwalzen, Explosionsauftragschweißen, Explosionsauftragschweißen gefolgt von Warm-Umwalzen,
- man das plattierte Blech einer Überhärtungsbehandlung beginnend von einer Temperatur zwischen 950 und 1180°C unterzieht, und
- man in der Kälte das plattierte Blech bis zu einer Dicke zwischen 2 und 4 mm walzt, wobei die erste Schicht oder Plattierung eine Dicke von mindestens 1 mm aufweist.

11. Verwendung eines plattierten Blechs nach einem der Ansprüche 1 bis 8 für die Herstellung von Tanks für den Transport korrosiver Produkte.

12. Verwendung eines plattierten Blechs nach einem der Ansprüche 1 bis 8 für die Herstellung von Schornsteinrohren.
